# EUROPEAN PATENT APPLICATION

(11) **EP 3 070 957 A1**
(43) Date of publication of application: **21.09.2016**
(21) Application number: 14833490.7
(22) Date of filing: 24.04.2014
(51) Int. Cl.: H04N 21/472, H04N 5/765

(54) **INTERCONNECTION, INTERWORKING AND MULTI-SCREEN INTERACTION DEVICE AND SYSTEM, AND IMPLEMENTATION METHOD**

(30) Priority: 13.11.2013 CN 201310567774
(71) Applicant: Huizhou TCL Mobile Communication Co., Ltd., Huizhou, Guangdong 516006 (CN)
(72) Inventor: ZHAO, Shiqing, Huizhou, Guangdong 516006 (CN); LUO, Dexiang Edward, Huizhou, Guangdong 516006 (CN); HU, Xuelong Ronald, Huizhou, Guangdong 516006 (CN); GUO, Aiping, Huizhou, Guangdong 516006 (CN)
(74) Representative: dompatent von Kreisler Selting Werner - Partnerschaft von Patent- und Rechtsanwälten mbB
(86) International application number: PCT/CN2014/076087
(87) International publication number: WO 2015/070566

(57) **Abstract**

An apparatus for inter-connection and multi-screen interactive communication, system and method employing the same are described. The apparatus comprises a central processing unit, a power management unit, a wireless-fidelity (WIFI) module, a high definition multimedia interface (HDMI). The WIFI module receives sharing information transmitted by the intelligent terminal. The power management unit, the WIFI module and HDMI are coupled to the central processing unit respectively and the central processing unit decodes the sharing information for transmitting the decoded information to the display terminal by way of HDMI.

## Description

### Field of the Invention

The present invention relates to a technical field of inter-connection apparatus, and more particularly to an apparatus for inter-connection and multi-screen interactive communication, system and method employing the same.

### Background of the Invention

With the popularization and development of intelligent terminal, the user increasingly possesses many intelligent terminals, such intelligent televisions, smartphones and intelligent tablets. The customer's experiences of the various terminals are getting much better. However, each terminal has its advantages, such as larger display size, video-viewing and game-playing effect of the intelligent television, and easy portability and usage of the smartphone. It is an important development trend of inter-connection and multi-screen interactive communication between the terminals. If inter-connection and multi-screen interactive communication between the terminals is achieved, the manufacturing cost of terminals are effectively decreased while the resource-sharing and advantage complementarities of all kinds of terminals are reached, the quality of customer's experiences is increased, and the user convenience is rising. However, the conventional techniques are unable to provide an easy-to-use apparatus for inter-connection and multi-screen interactive communication, system and method. Consequently, there is a need to develop a novel apparatus to solve the afore-mentioned problems.

### Summary of the Invention

In vie of the aforementioned problems, the present invention provides an apparatus for inter-connection and multi-screen interactive communication, system and method employing the same to solve the problems of failing to achieve the inter-connection and multi-screen interactive communication between intelligent terminals.

The present invention provides a technical scheme as follows:
An apparatus for multi-screen interactive communication to implement the multi-screen interaction between a display terminal and an intelligent terminal, the apparatus comprises a central processing unit; a power management unit; a wireless-fidelity (WIFI) module, for coupling to the intelligent terminal by way of a wireless transmission manner and for receiving sharing information transmitted by the intelligent terminal; and a high definition multimedia interface (HDMI), for coupling to the display terminal; wherein the power management unit, the WIFI module and HDMI are coupled to the central processing unit respectively and the central processing unit decodes the sharing information for transmitting the decoded information to the display terminal for display by way of HDMI; the central processing unit comprises an audio/video decoding/encoding processor; a code stream processor; a HDMI output control processor; a multimedia player processor; a storage controller; and an external interface processor; wherein the power management unit is connected to a universal serial bus (USB) interface.

In the apparatus for multi-screen interactive communication, the central processing unit further comprises a near field communication.

In the apparatus for multi-screen interactive communication, the central processing unit further comprises a Hall effect proximity sensor.

In the apparatus for multi-screen interactive communication, the central processing unit further comprises a debugging interface.

An apparatus for multi-screen interactive communication to implement the multi-screen interaction between a display terminal and an intelligent terminal, the apparatus comprises a central processing unit; a power management unit; a wireless-fidelity (WIFI) module, for coupling to the intelligent terminal by way of a wireless transmission manner and for receiving sharing information transmitted by the intelligent terminal; and a high definition multimedia interface (HDMI), for coupling to the display terminal; wherein the power management unit, the WIFI module and HDMI are coupled to the central processing unit and the central processing unit decodes the sharing information for transmitting the decoded information to the display terminal for display by way of HDMI.

In the apparatus for multi-screen interactive communication, the central processing unit comprises an audio/video decoding/encoding processor; a code stream processor; a HDMI output control processor; a multimedia player processor;
a storage controller; and an external interface processor.

In the apparatus for multi-screen interactive communication, the power management unit is connected to a universal serial bus (USB) interface.

In the apparatus for multi-screen interactive communication, the central processing unit further comprises a near field communication.

In the apparatus for multi-screen interactive communication, the central processing unit further comprises a Hall effect proximity sensor.

In the apparatus for multi-screen interactive communication, the central processing unit further comprises a debugging interface.

A system for multi-screen interactive communication, the system comprises an apparatus for multi-screen interactive communication, a display terminal and an intelligent terminal, wherein the display terminal is coupled to the apparatus by way of HDMI interface, the apparatus is coupled to the intelligent terminal by way of the WIFI module so that the intelligent terminal is capable of transmitting the sharing information to the apparatus and the central processing unit decodes the sharing information to allow the HDMI interface to transfer the sharing information to the display terminal for display.

A method for performing multi-screen interactive communication by a system of inter-connection and multi-screen interactive communication according to claim 11, the method comprises coupling the display terminal to the apparatus by way of HDMI interface; coupling the apparatus to the intelligent terminal by way of the WIFI module so that the intelligent terminal is capable of transmitting the sharing information to the apparatus; and decoding the sharing information by the central processing unit to allow the HDMI interface to transfer the sharing information to the display terminal for display.

In the method for performing multi-screen interactive communication, comprising installing a NFC module in the central processing unit and installing a corresponding NFC module in the intelligent terminal; performing a safety authentication procedure of the NFC modules of both the intelligent terminal and the apparatus when the distance between the intelligent terminal and the apparatus is within the NFC distance; and starting a WIFI connection starts after the safety authentication procedure is finished.

In the method for performing multi-screen interactive communication, comprising installing a Hall effect proximity sensor in the central processing unit and installing a magnet in the intelligent terminal; activating the Hall effect proximity sensor when the intelligent terminal approaches the apparatus to reach a predetermined distance; and starting a WIFI connection when the apparatus detects the activated Hall effect proximity sensor.

An apparatus for inter-connection and multi-screen interactive communication to implement the multi-screen interaction between a display terminal and an intelligent terminal comprises a central processing unit; a power management unit coupled to the central processing unit; a wireless-fidelity (WIFI) module coupled to the central processing unit; and a high definition multimedia interface (HDMI) coupled to the central processing unit; wherein the display terminal is coupled to the apparatus by way of HDMI interface, the apparatus is coupled to the intelligent terminal by way of the WIFI module so that the intelligent terminal is capable of transmitting the sharing information to the apparatus and the central processing unit decodes the sharing information to allow the HDMI interface to transfer the sharing information to the display terminal for display.

In the apparatus for inter-connection and multi-screen interactive communication, the central processing unit comprises an audio/video decoding/encoding processor, a code stream processor, a HDMI output control processor, a multimedia player processor, a storage controller and an external interface processor.

In the apparatus for inter-connection and multi-screen interactive communication, the power management unit is connected to a universal serial bus (USB) interface.

In the apparatus for inter-connection and multi-screen interactive communication, the central processing unit further comprises a near field communication.

In the apparatus for inter-connection and multi-screen interactive communication, the central processing unit further comprises a Hall effect proximity sensor.

In the apparatus for inter-connection and multi-screen interactive communication, the central processing unit further comprises a debugging interface.

The advantages is that the present invention employs an apparatus for inter-connection and multi-screen interactive communication to receive and transmit data by way of WIFI module, to decode the data by using the central processing unit, and to transmit the decoded data to the display terminal by way of HDMI interface for high-definition display. In the present invention, the manufacturing cost of terminals are effectively decreased while the resource-sharing and advantage complementarities of all kinds of terminals are reached, the quality of customer's experiences is increased, and the user convenience is rising.

### Brief Description of the Drawings

FIG. 1 is a schematic structural view of an apparatus for inter-connection and multi-screen interactive communication according to one embodiment of the present invention;
FIG. 2 is a schematic structural view of point-to-point connection between the apparatus and intelligent terminal according to a first embodiment of the present invention;
FIG. 3 is a schematic structural view of point-to-point connection between the apparatus and intelligent terminal according to a second embodiment of the present invention; and
FIG. 4 is a schematic structural view of a system for inter-connection and multi-screen interactive communication according to one embodiment of the present invention.

### Detailed Description of the Preferred Embodiments

The present invention provides an apparatus for inter-connection and multi-screen interactive communication, system and method employing the same. The foregoing aspects and many of the attendant advantages of this invention will become more readily appreciated as the same becomes better understood by reference to the following detailed description but rather than limiting of the present invention.

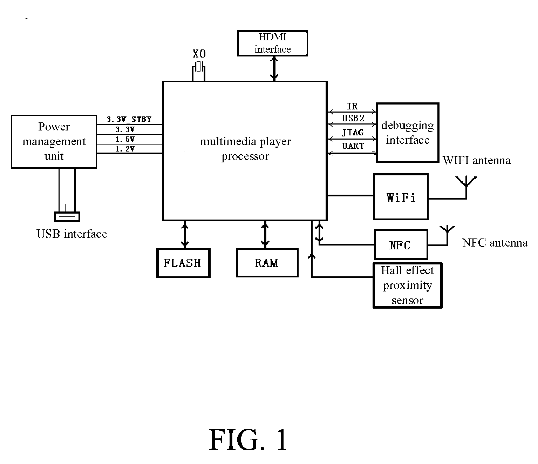

Referring to FIG. 1, it is a schematic structural view of an apparatus for inter-connection and multi-screen interactive communication according to one embodiment of the present invention. The apparatus includes:
A central processing unit (e.g. multimedia central processing unit);
A power management unit, a WIFI (Wireless-Fidelity) module, a HDMI interface (High Definition Multimedia Interface) are coupled to the central processing unit;
The display terminal is coupled to the apparatus by way of HDMI interface, the apparatus is coupled to the intelligent terminal by way of the WIFI module so that the intelligent terminal is capable of transmitting the sharing information to the apparatus and the central processing unit decodes the sharing information to allow the HDMI interface to transfer the sharing information to the display terminal for display.

In one embodiment, the intelligent terminal is selected from one group consisting of smartphone, tablet computer or the combination and the combination. The display terminal may be television or monitor.

In this case, the power management unit is coupled to the power interface for supplying electrical power to the apparatus. The WIFI module is coupled to the intelligent terminal by way of a wireless transmission manner. The HDMI interface is coupled to the display terminal such that the display terminal displays the information issued from the intelligent terminals at a high-definition (HD) resolution. The central processing unit may be multimedia central processing unit for decoding the information from the intelligent terminals to normally display the information on the display terminal. In this way, when the display terminal is electrically connected to the apparatus by way of HDMI interface, and the intelligent terminal is coupled to the apparatus by way of wireless transmission manner, the effect of inter-connection and multi-screen interactive communication is implemented to employ the feature of the larger display size and intelligence to achieve the effects of rapid video-viewing and game-playing.

In the embodiments of the present invention, the intelligent terminals are compatible to the Miracast protocol (wireless display image mirror) to simplify the connection procedure for playing the multimedia application content on the remote video equipment.

In one embodiment, the central processing unit includes video encoding/decoding processor, code stream processor, HDMI output control processor, multimedia player processor, storage controller and external interface processor, which are multimedia central processing unit, for processing the information from the intelligent terminal to play the information on the display terminal. Moreover, the central processing unit is coupled to flash memory or RAM (random access memory).

Furthermore, the power management unit is coupled to a universal serial bus (USB) interface, e.g. micro USB interface or standard USB interface, so that the USB interface provides +5 V (voltage) power supply to the apparatus and the power management unit converts +5 V (voltage) power supply of USB interface into power level to meet the power requirement in the parts of the apparatus.

The HDMI interface is an audio/video output channel for coupling to the corresponding HDMI interface of the display terminal.

In the present invention, the target intelligent terminal is coupled to the apparatus by point-to-point connection to avoid un-related intelligent terminal connecting to the apparatus. In one embodiment, Near Field Communication (NFC) and/or Hall effect proximity sensor may be used to implement the above-mentioned point-to-point connection.

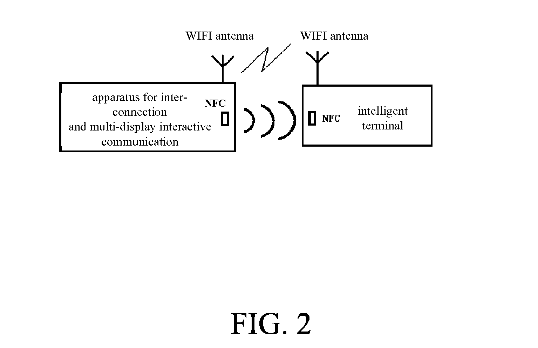

Specifically, as shown in FIG. 2, a NFC module is disposed in the central processing unit and it is required to install a corresponding NFC module in the intelligent terminal wherein the communication distance is shorter than 10 cm. When the intelligent terminal approaches the apparatus for inter-connection and multi-screen interactive communication and when the distance between the intelligent terminal and the apparatus is within the NFC distance, e.g. 10 cm, the NFC modules of both the intelligent terminal and the apparatus perform a safety authentication procedure. After the safety authentication procedure is finished, WIFI connection starts to implement the WIFI connection between the intelligent terminal and the apparatus and then performs data transmission based on Miracast protocol after the matching WIFI connection is complete.

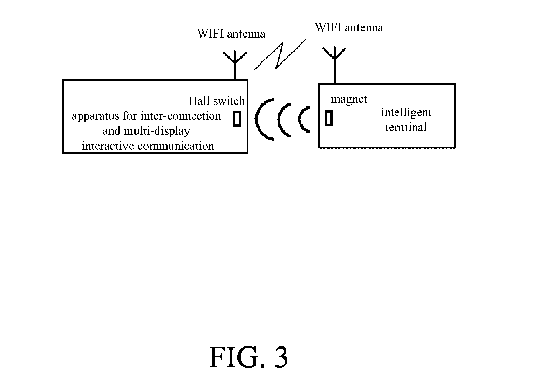

In one embodiment, Hall effect proximity sensor (Hall switch) is disposed in the central processing unit. In one case, the Hall effect proximity sensor is disposed in the external side of the central processing unit, as shown in FIG. 3 and a magnet is installed along the outer edge of the corresponding intelligent terminal or a existing magnet of the corresponding intelligent terminal is employed. When the corresponding intelligent terminal approaches the apparatus to reach a predetermined distance, the Hall effect proximity sensor is activated, which equivalently clicks a key. When the apparatus detects the activated signal of Hall effect proximity sensor, a WIFI connection starts to implement the WIFI connection between the intelligent terminal and the apparatus. To ensure the safety of automatic matching procedure, the apparatus for inter-connection and multi-screen interactive communication adopts lower transmission power to transmit the matching information, e.g. safety authentication procedure, at a close range so that the un-related intelligent terminal cannot received the information to ensure the safety and accuracy during the point-to-point connection. The data transmission is performed based on Miracast protocol after the matching WIFI connection is complete. In one embodiment of the present invention, Hall effect proximity sensor is selected from one group consisting of model numbers HAL13S, HAL148, HAL148L, ES248, ES247, ES242, ES246, and ES821 with low transmission power. For example, the working voltage of HAL13S is the range from 2.4 V to 5.5 V, its working current is 0.009 mA, and its working temperature is the range from -40 to 85 Celsius degree.

The above-mentioned matching procedure is implemented by proximity manner to complete the matching connection for improving the safety, reliability, concision, stability and better user experience. In one case, one or both of Hall effect proximity sensor or NFC communication module is equipped with the apparatus for inter-connection and multi-screen interactive communication to be convenient for the user's choice.

Moreover, the central processing unit further comprises a debugging interface which is used to implement various debugging and testing procedure during the development stage and manufacturing stage of the apparatus and is suitable for upgrading the system software of the apparatus.

In one embodiment, the apparatus for inter-connection and multi-screen interactive communication and the intelligent terminal is applicable to different operating system, e.g. Android and Windows operating systems (OS). In order to employ various operating systems to intelligent terminal, the apparatus is capable of detecting the OS type of intelligent terminal and configuring the related parameters of the apparatus based on the OS type of intelligent terminal to perform the functions of inter-connection and multi-screen interactive communication. For example, a plurality of operating system can be installed in the apparatus in advance and switched according to OS of the intelligent terminal.

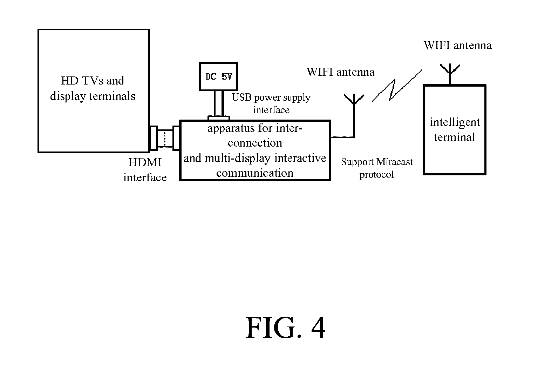

Based on the aforementioned apparatus, the present invention further provides a system for inter-connection and multi-screen interactive communication, as shown in FIG. 4. The system includes the apparatus for inter-connection and multi-screen interactive communication, display terminal (e.g. HD TVs) and intelligent terminal wherein the display terminal is connected to the apparatus by way of HDMI interface, the apparatus is coupled to the intelligent terminal by way of WIFI module, the intelligent terminal shares the sharing information to the apparatus by way of WIFI module to allow the central processing unit in the apparatus to decode the information, and the decoded information is transmitted to the display terminal to be displayed.

Based on the aforementioned system, the present invention further provides a method for inter-connection and multi-screen interactive communication performed in the system, the method comprising the steps of:
the display terminal is connected to the apparatus by way of HDMI interface, the apparatus is coupled to the intelligent terminal by way of WIFI module, the intelligent terminal shares the sharing information to the apparatus by way of WIFI module to allow the central processing unit in the apparatus to decode the information, and the decoded information is transmitted to the display terminal to be displayed.

Further, a NFC module is installed in the central processing unit and a corresponding NFC module is installed in the intelligent terminal. When the distance between the intelligent terminal and the apparatus is within the NFC distance, the NFC modules of both the intelligent terminal and the apparatus perform a safety authentication procedure. After the safety authentication procedure is finished, WIFI connection starts. The detailed techniques is described as the above-mentioned apparatus and omitted here.

Additionally, Hall effect proximity sensor (Hall switch) is installed in the central processing unit. In one case, a magnet is installed in the intelligent terminal. When the intelligent terminal approaches the apparatus to reach a predetermined distance, the Hall effect proximity sensor is activated. When the apparatus detects the activated signal of Hall effect proximity sensor, a WIFI connection starts. The detailed techniques is described as the above-mentioned apparatus and omitted here.

The present invention employs an apparatus for inter-connection and multi-screen interactive communication to receive and transmit data by way of WIFI module, to decode the data by using the central processing unit, and to transmit the decoded data to the display terminal by way of HDMI interface for high-definition display. In the present invention, the manufacturing cost of terminals are effectively decreased while the resource-sharing and advantage complementarities of all kinds of terminals are reached, the quality of customer's experiences is increased, and the user convenience is rising.

As is understood by a person skilled in the art, the foregoing preferred embodiments of the present invention are illustrative rather than limiting of the present invention. It is intended that they cover various modifications and similar arrangements be included within the spirit and scope of the appended claims, the scope of which should be accorded the broadest interpretation so as to encompass all such modifications and similar structure.

## Claims

1. An apparatus for multi-screen interactive communication to implement the multi-screen interaction between a display terminal and an intelligent terminal, the apparatus comprising:
a central processing unit;
a power management unit;
a wireless-fidelity (WIFI) module, for coupling to the intelligent terminal by way of a wireless transmission manner and for receiving sharing information transmitted by the intelligent terminal; and
a high definition multimedia interface (HDMI), for coupling to the display terminal;
wherein the power management unit, the WIFI module and HDMI are coupled to the central processing unit respectively and the central processing unit decodes the sharing information for transmitting the decoded information to the display terminal for display by way of HDMI;
the central processing unit comprising:
an audio/video decoding/encoding processor;
a code stream processor;
a HDMI output control processor;
a multimedia player processor;
a storage controller; and
an external interface processor;
wherein the power management unit is connected to a universal serial bus (USB) interface.

2. The apparatus for multi-screen interactive communication of claim 1, wherein the central processing unit further comprises a near field communication.

3. The apparatus for multi-screen interactive communication of claim 1, wherein the central processing unit further comprises a Hall effect proximity sensor.

4. The apparatus for multi-screen interactive communication of claim 1, wherein the central processing unit further comprises a debugging interface.

5. An apparatus for multi-screen interactive communication to implement the multi-screen interaction between a display terminal and an intelligent terminal, the apparatus comprising:
a central processing unit;
a power management unit;
a wireless-fidelity (WIFI) module, for coupling to the intelligent terminal by way of a wireless transmission manner and for receiving sharing information transmitted by the intelligent terminal; and
a high definition multimedia interface (HDMI), for coupling to the display terminal;
wherein the power management unit, the WIFI module and HDMI are coupled to the central processing unit and the central processing unit decodes the sharing information for transmitting the decoded information to the display terminal for display by way of HDMI.

6. The apparatus for multi-screen interactive communication of claim 5, wherein the central processing unit comprises:
an audio/video decoding/encoding processor;
a code stream processor;
a HDMI output control processor;
a multimedia player processor;
a storage controller; and
an external interface processor.

7. The apparatus for multi-screen interactive communication of claim 5, wherein the power management unit is connected to a universal serial bus (USB) interface.

8. The apparatus for multi-screen interactive communication of claim 5, wherein the central processing unit further comprises a near field communication.

9. The apparatus for multi-screen interactive communication of claim 5, wherein the central processing unit further comprises a Hall effect proximity sensor.

10. The apparatus for multi-screen interactive communication of claim 5, wherein the central processing unit further comprises a debugging interface.

11. A system for multi-screen interactive communication, the system comprising an apparatus for multi-screen interactive communication, a display terminal and an intelligent terminal according to any of claims 1 to 6, wherein the display terminal is coupled to the apparatus by way of HDMI interface, the apparatus is coupled to the intelligent terminal by way of the WIFI module so that the intelligent terminal is capable of transmitting the sharing information to the apparatus and the central processing unit decodes the sharing information to allow the HDMI interface to transfer the sharing information to the display terminal for display.

12. A method for performing multi-screen interactive communication by a system of inter-connection and multi-screen interactive communication according to claim 11, the method comprising:
coupling the display terminal to the apparatus by way of HDMI interface;
coupling the apparatus to the intelligent terminal by way of the WIFI module so that the intelligent terminal is capable of transmitting the sharing information to the apparatus; and
decoding the sharing information by the central processing unit to allow the HDMI interface to transfer the sharing information to the display terminal for display.

13. The method for performing multi-screen interactive communication of claim 12, comprising:
installing a NFC module in the central processing unit and installing a corresponding NFC module in the intelligent terminal;
performing a safety authentication procedure of the NFC modules of both the intelligent terminal and the apparatus when the distance between the intelligent terminal and the apparatus is within the NFC distance; and
starting a WIFI connection starts after the safety authentication procedure is finished.

14. The method for performing multi-screen interactive communication of claim 12, comprising:
installing a Hall effect proximity sensor in the central processing unit and installing a magnet in the intelligent terminal;
activating the Hall effect proximity sensor when the intelligent terminal approaches the apparatus to reach a predetermined distance; and
starting a WIFI connection when the apparatus detects the activated Hall effect proximity sensor.

15. An apparatus for inter-connection and multi-screen interactive communication to implement the multi-screen interaction between a display terminal and an intelligent terminal, the apparatus comprising:
a central processing unit;
a power management unit coupled to the central processing unit;
a wireless-fidelity (WIFI) module coupled to the central processing unit; and
a high definition multimedia interface (HDMI) coupled to the central processing unit;
wherein the display terminal is coupled to the apparatus by way of HDMI interface, the apparatus is coupled to the intelligent terminal by way of the WIFI module so that the intelligent terminal is capable of transmitting the sharing information to the apparatus and the central processing unit decodes the sharing information to allow the HDMI interface to transfer the sharing information to the display terminal for display.

16. The apparatus for inter-connection and multi-screen interactive communication of claim 15, wherein the central processing unit comprises an audio/video decoding/encoding processor, a code stream processor, a HDMI output control processor, a multimedia player processor, a storage controller and an external interface processor.

17. The apparatus for inter-connection and multi-screen interactive communication of claim 15, wherein the power management unit is connected to a universal serial bus (USB) interface.

18. The apparatus for inter-connection and multi-screen interactive communication of claim 15, wherein the central processing unit further comprises a near field communication.

19. The apparatus for inter-connection and multi-screen interactive communication of claim 15, wherein the central processing unit further comprises a Hall effect proximity sensor.

20. The apparatus for inter-connection and multi-screen interactive communication of claim 15, wherein the central processing unit further comprises a debugging interface.
